# EUROPEAN PATENT APPLICATION

(11) **EP 1 114 670 A1**
(43) Date of publication of application: **11.07.2001**
(21) Application number: 01100330.8
(22) Date of filing: 04.01.2001
(51) Int. Cl.: B01F 5/06

(54) **Flow deflector device**

(30) Priority: 06.01.2000 CH 201934
(71) Applicant: Solis China Limited, Kowloon, Hong Kong (HK)
(72) Inventor: Wong, Tommy Chi-Kin, Kowloon, Hong Kong (HK)
(74) Representative: Kador & Partner

(57) **Abstract**

The present invention relates to a device for liquid (ie:water) treatment, particularly, to a new flow deflector device. This novel device is pertinent to the two important elements of water treatment: time and evenness of the reaction. The inner wall of the outer shell of the device has twisted flow deflector grooves, which are monoblock moulded. As compared with the existing technique, this novel invention has such advantages as excellent performance of flow deflector for liquid, simple fabrication work and low cost.

## Description

### BACKGROUND OF THE INVENTION

### Field of the Invention

The present invention relates to a flow deflector device for liquid, more particularly, to a device for liquid (such as water) treatment.

### Description of Prior Art

The present invention relates to a device for liquid―ie:water treatment, particularly, to a new flow deflector device.

The flow deflector grooves inside the shell of the existing flow deflector device for liquid are either straight or compose of blocks of inner spiral circles. Liquid in the straight canister can not be evenly mixed and flow fluently. In addition, the flow-guiding canister composed by segments of inner spiral circles causes high manufacturing cost and the fabrication work is complicated that is laborious. It also can not be sufficiently sealed, this disadvantage can easily create the tolerance of pressure between the two flow deflector grooves. As a result, liquid can not be completely treated when it flows through the interval of the circular segments, the treatment for water thereby is insignificant.

### SUMMARY OF THE INVENTION

It is the objective of this invention to provide a new flow deflector device for liquid in order to enable the liquid flow evenly in the flow deflector device, what's more, the fabrication work is more simple than the conventional device.

In order to achieve the above-mentioned objective, the present invention has monoblock moulded flow deflector grooves twisting along the inner wall of the shell of the device.

As compared with the existing technique, this novel invention has such advantages as excellent performance of flow deflector, simple fabrication work and low cost.

### BRIEF DESCRIPTION OF THE DRAWINGS

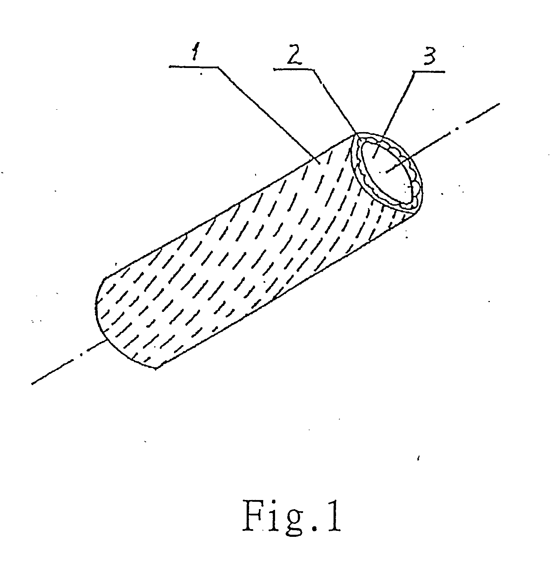

The accomplishment of the above-mentioned object of the present invention will become apparent from the following description and its accompanying drawings which disclose illustrative an embodiment of the present invention, and are as follows: Figure 1 is a perspective view of the present invention.

### DETAILED DESCRIPTION OF THE PREFERRED EMBODIMENT

Referring to Figure 1, the present invention includes a outer shell 1, its inner surface has . twisted flow deflector grooves 2. The flow deflector grooves 2 twisting along the inner wall of the outer shell 1 are monoblock moulded. Liquid in between the core 3 of the flow deflector device and the outer shell 1 flows along the flow deflector grooves 2. As the distance for the liquid to flow increases, time for the liquid to stay in the device and react with the core 3 will be prolonged in sequence. In this arrangement, the treatment can be more efficiently performed.

## Claims

1. A flow deflector device for liquid, which includes an outer shell, a plurality of twisted flow deflector grooves are disposed on inner wall of said outer shell,
wherein said flow deflector grooves are monoblock moulded so as to improve the efficiency of liquid treatment, save labor and reduce cost.
